# EUROPÄISCHE PATENTANMELDUNG

(11) **EP 2 083 397 A1**
(43) Veröffentlichungstag der Anmeldung: **29.07.2009**
(21) Anmeldenummer: 08021777.1
(22) Anmeldetag: 16.12.2008
(51) Int. Cl.: G07C 9/00, G06Q 10/00

(54) **System zur Beartbeitung von Werteinheiten**

(30) Priorität: 16.01.2008 DE 102008004480
(71) Anmelder: Wincor Nixdorf International GmbH, 33106 Paderborn (DE)
(72) Erfinder: Nattmann, Henning, 33098 Paderborn (DE)

(57) **Zusammenfassung**

Es wird ein System zur Bearbeitung von Werteinheiten, insbesondere zur Abholung von Bargeld in Bank- oder Handelsfilialen durch Mitarbeiter von Werttransportunternehmen (WTU) beschrieben. Dabei ist das System
dadurch gekennzeichnet, dass
- ein Server mit einer Datenbank vorgesehen ist,
- in den Bank- oder Handelsfilialen Datenverarbeitungsanlagen vorgesehen sind, die über eine Datenübertragungsleitung mit dem Server verbindbar sind,
- in der Server-Datenbank einerseits Stammdaten von Bank- oder Handelsfilialen, und andererseits Stammdaten von mindestens einem Werttransportuntemehmen, gespeichert sind,
- von dem Werttransportuntemehmen unter Verwendung der Stammdaten an den Server Plandaten übermittelbar sind, wobei die Plandaten Informationen darüber umfassen, welche Bank-/Handelsfiliale wann und von welchem(n) WTU-Mitarbeiter(n) zur Bearbeitung von Werteinheiten aufgesucht wird,
- die für die Bank-/Handelsfilialen relevanten Plandaten vom Server an die Datenverarbeitungsanlagen der Bank- /Handelsfiliale übermittelbar sind.

## Beschreibung

Die Erfindung bezieht sich auf ein System zur Bearbeitung von Werteinheiten, insbesondere zur Abholung von Bargeld in Bank- oder Handelsfilialen durch Mitarbeiter von Werttransportunternehmen (WTU).

Zur Abholung von Werteinheiten, insbesondere Bargeld, werden von Banken und Handelsunternehmen Werttransportunternehmen beauftragt, welche die Werteinheiten in den entsprechenden Bankfilialen oder Handelsfilialen abholen und zu sogenannten Cash-Centern bringen.

Um die große Zahl von Bank-/Handelsfilialen bedienen zu können, setzt ein Werttransportunternehmen innerhalb einer Region mehrere Teams von WTU-Mitarbeitern mit entsprechend gesicherten Transportfahrzeugen ein. Dabei fährt jedes dieser Teams auf seiner Tour eine Vielzahl von Bank-/Handelsfilialen an. Ein Werttransportunternehmen führt somit - allein regional betrachtet - täglich mehrere Touren mit jeweils einer Vielzahl von sogenannten Bearbeitungs-Stops durch, wobei unter einem Bearbeitungs-Stop das Anfahren einer Bank-/Handelsfiliale zum Abholen der Werteinheiten verstanden wird. Bisher ist es so, dass ein Werttransportunternehmen der Bank-/Handelsfiliale per Telefax die Abholung ankündigt (in der Regel einen Tag im Voraus), wobei neben einem Bearbeitungszeitfenster insbesondere mitgeteilt wird, welcher(e) WTU-Mitarbeiter kommen wird. Der zuständige Filial-Mitarbeiter in der Bank-/Handelsfiliale hat nun die Verpflichtung vor Übergabe der Werteinheiten die Abholberechtigung des/der WTU-Mitarbeiter(s) zu überprüfen, in dem er sich den Personalausweis oder Mitarbeiterausweis des WTU-Mitarbeiters vorlegen lässt und anhand des Telefaxes feststellt, ob dieser Name dort aufgeführt ist. In der Praxis findet diese Überprüfung jedoch kaum statt, da die Telefaxe oftmals verlegt werden und die WTU-Mitarbeiter dem Filial-Mitarbeiter im Laufe der Zeit bekannt sind.

Hier besteht nun ein Sicherheitsrisiko, da der Umstand, dass eine Person dem Filial-Mitarbeiter als WTU-Mitarbeiter bekannt ist, nicht zwingend bedeutet, dass diese Person aktuell auch noch bei dem Werttransportunternehmen arbeitet und auch zur Abholung berechtigt ist. Aufgrund der relativ hohen Mitarbeiter-Fluktuationsrate bei Werttransportunternehmen ist das vorstehend beschriebene Risiko einer unberechtigten Entgegennahme von Werteinheit nicht unerheblich.

Darüber hinaus ist das vorstehend beschriebene Verfahren relativ aufwendig. Nachdem das Werttransportunternehmen oder eine regionale Niederlassung des Werttransportunternehmens seine Tourplanungen gemacht hat, wobei für jede Tour festgelegt wird, welche Bank-/Handelsfiliale an welchem Tag, in welchem Zeitfenster und von welchen WTU-Mitarbeitern angefahren wird, müssen an sämtliche Bank-/Handelsfilialen Telefaxe verschickt werden. Aufgrund der großen Zahl der anzufahrenden Bank-/Handelsfilialen ist dies mit einem erheblichen administrativen Aufwand verbunden.

Aufgabe der Erfindung ist es daher, ein System zur Bearbeitung von Werteinheiten, insbesondere zur Abholung von Bargeld in Bank- oder Handelsfilialen durch Mitarbeiter von Werttransportunternehmen (WTU) zu schaffen, bei dem die Sicherheit und die Effizienz erhöht wird.

Diese Aufgabe wird durch die Merkmale des Patentanspruchs 1 gelöst. Die sich daran anschließenden abhängigen Ansprüche enthalten vorteilhafte Ausgestaltungen.

Das erfindungsgemäße System weist einen Server mit einer Datenbank auf, wobei in den Bank-/Handelsfilialen Datenverarbeitungsanlagen vorgesehen sind, die über eine Datenübertragungsleitung mit diesem Server, vorzugsweise über das Internet, verbindbar sind. In der Server-Datenbank sind nun einerseits Stammdaten von Bank- oder Handelsfilialen und andererseits Stammdaten von mindestens einem Werttransportunternehmen gespeichert. Von dem Werttransportunternehmen sind nun unter Verwendung der Stammdaten an den Server Plandaten übermittelbar, wobei die Plandaten insbesondere Informationen darüber umfassen, welche Bank-/Handelsfiliale an welchem Tag, in welchen Zeitfenster und von welchem(n) WTU-Mitarbeiter(n) zur Bearbeitung von Werteinheiten angefahren wird. Damit können sämtliche Tourplanungsdaten auf dem Server abgelegt werden. Erfindungsgemäß werden nun die für die Bank-/Handelsfilialen relevanten Plandaten vom Server an die Datenverarbeitungsanlagen der Bank- /Handelsfilialen übermittelt. Damit entfällt das aufwendige und sicherheitskritische tägliche Versenden einer großen Vielzahl von Telefaxen. In einer besonders vorteilhaften Ausführungsform umfassen die im Server gespeicherten Stammdaten des Werttransportunternehmens auch Identifizierungsdaten von WTU-Mitarbeitern (systemspezifische Namen von WTU-Mitarbeitern). Somit kann vor der Übergabe von Werteinheiten an einen WTU-Mitarbeiter über eine Datenverarbeitungsanlage in der Bank-/Handelsfiliale anhand der in der Server-Datenbank gespeicherten Identifizierungsdaten eine Authentifizierung des WTU-Mitarbeiters erfolgen. Durch die Verwendung von biometrischen Daten als Identifizierungsdaten wird eine besonders sichere Authentifizierung gewährleistet.

Anhand der beigefügten Zeichnungen soll die Erfindung nachfolgend näher erläutert werden. Es zeigt:
- Figur 1: ein Blockdiagramm des erfindungsgemäßen Systems,
- Figur 2: ein Flussdiagramm des Prozesses innerhalb des erfindungsgemäßen Systems.

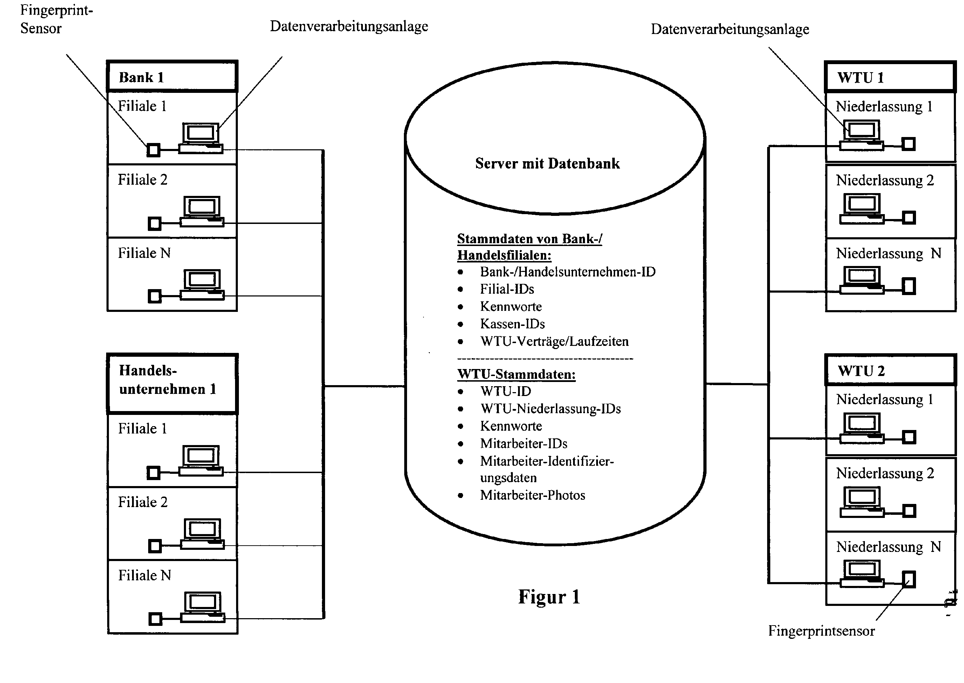

In Figur 1 ist ein Blockdiagramm des erfindungsgemäßen Systems dargestellt. Kernstück des Systems ist ein Server mit einer Datenbank. In der Server-Datenbank sind Stammdaten von Bank- oder Handelsfilialen sowie Stammdaten von mindestens einem Werttransportunternehmen gespeichert. Wenn im Folgenden zur Vereinfachung von einer Bank-/Handelsfiliale die Rede ist, so ist damit immer eine Bank- oder Handelsfiliale gemeint. In Figur 1 sind beispielhaft eine am System beteiligte Bank und/oder ein am System beteiligtes Handelsunternehmen mit jeweils einer Vielzahl von Filialen dargestellt. Selbstverständlich können am System mehrere Banken und mehrere Handelsunternehmen mit jeweils einer Vielzahl von Filialen beteiligt sein. Auf der anderen Seite sind in Figur 1 beispielhaft zwei am System beteiligte Werttransportunternehmen (WTU1, WTU2) mit mehreren Niederlassungen dargestellt. Die Kommunikation der Bank-/Handelsfilialen sowie der WTU-Niederlassungen mit dem Server erfolgt über entsprechende in den Filialen und WTU-Niederlassungen vorgesehene Datenverarbeitungsanlagen, die vorzugsweise über das Internet mit dem Server verbindbar sind.

Die Stammdaten der Bank-/Handelsfilialen umfassen unter anderem Filial-IDs. Dabei handelt es sich um systemspezifische Namen der Bank-/Handelsfilialen, die als alphanumerische Zeichen ausgebildet sind. Zusätzlich zur Filial-ID kann auch noch eine allgemeine (übergeordnete) ID für die Bank oder das Handelsunternehmen vorgesehen sein, wobei die Filial-ID sich vorzugsweise zumindest teilweise aus der übergeordneten Bank-/Handelsunternehmens-ID ableitet. Die Filial-ID dient zur Identifizierung und eindeutigen Zuordnung einer Bank-/Handelsfiliale im System. Darüber hinaus sind im Server vorzugsweise auch noch geheime Kennworte hinterlegt, die den Filial-IDs zugeordnet sind. Dabei ist der Zugang einer Bank-/Handelsfiliale zum Server vorzugsweise nur abgesichert möglich, in dem ein Filial-Mitarbeiter vom Server aufgefordert wird, die Filial-ID und das zugehörige geheime Kennwort einzugeben. Dies kann beispielsweise über eine Eingabemaske auf einer Portal-Website des Servers erfolgen. Nur wenn vom Server festgestellt wurde, dass das eingegebene Kennwort mit dem zur Filial-ID gehörigen abgespeicherten Kennwort übereinstimmt, wird der Zugang zum Server gewährt.

Die Stammdaten der Bank-/Handelsfilialen umfassen ferner Informationen darüber, mit welchen WTUs bzgl. einer Bank-/Handelsfiliale Verträge hinsichtlich der Abholung von Bargeld bestehen sowie die Laufzeiten dieser Verträge.

Im Falle von Handelsfilialen können die Stammdaten auch noch sogenannte Kassen-IDs umfassen, anhand derer Kassen in einer Handelsfiliale eindeutig identifizierbar sind. Damit lassen sich dann auch bestimmte Werteinheiten im nachfolgenden Prozess bis hin zum Cash-Center einer bestimmten Kasse zuordnen, wodurch ein automatisiertes Bargeld-Management in Handelsunternehmen unterstützt wird.

Die WTU-Stammdaten umfassen unter anderem WTU-Niederlassungs-IDs. Dabei handelt es sich um systemspezifische Namen der WTU-Niederlassungen, die als alphanumerische Zeichen ausgebildet sind. Zusätzlich zur Niederlassungs-ID kann auch noch eine allgemeine (übergeordnete) WTU-ID für das Werttransportunternehmen vorgesehen sein, wobei die Filial-ID sich vorzugsweise zumindest teilweise aus der übergeordneten WTU-ID ableitet. Falls es nur eine Niederlassung gibt, ist die Niederlassungs-ID mit der WTU-ID identisch. Die Niederlassungs-ID dient zur Identifizierung und eindeutigen Zuordnung einer WTU-Niederlassung im System. Darüber hinaus sind im Server vorzugsweise auch noch geheime Kennworte hinterlegt, die den Niederlassungs-IDs zugeordnet sind. Dabei ist der Zugang einer WTU-Niederlassung zum Server vorzugsweise nur abgesichert möglich, in dem ein WTU-Mitarbeiter vom Server aufgefordert wird, die WTU-Niederlassungs-ID und das zugehörige geheime Kennwort einzugeben. Dies kann beispielsweise über eine Eingabemaske auf einer Portal-Website des Servers erfolgen.

Nur wenn vom Server festgestellt wurde, dass das eingegebene Kennwort mit dem zur WTU-Niederlassungs-ID gehörigen abgespeicherten Kennwort übereinstimmt, wird der Zugang zum Server gewährt.
Die Portal-Website des Servers für die Werttransportunternehmen kann von der Portal-Website für die Bank-/Handelsfilialen verschieden sein.

Die WTU-Stammdaten umfassen ferner Mitarbeiter-IDs. Dabei handelt es sich um systemspezifische Namen der WTU-Mitarbeiter, die als alphanumerische Zeichen, z.B. unter Verwendung des Nach-und/oder Vornamens ausgebildet sind. Darüber hinaus umfassen die WTU-Stammdaten Identifizierungsdaten von WTU-Mitarbeitern, die den Mitarbeiter-IDs zugeordnet sind.

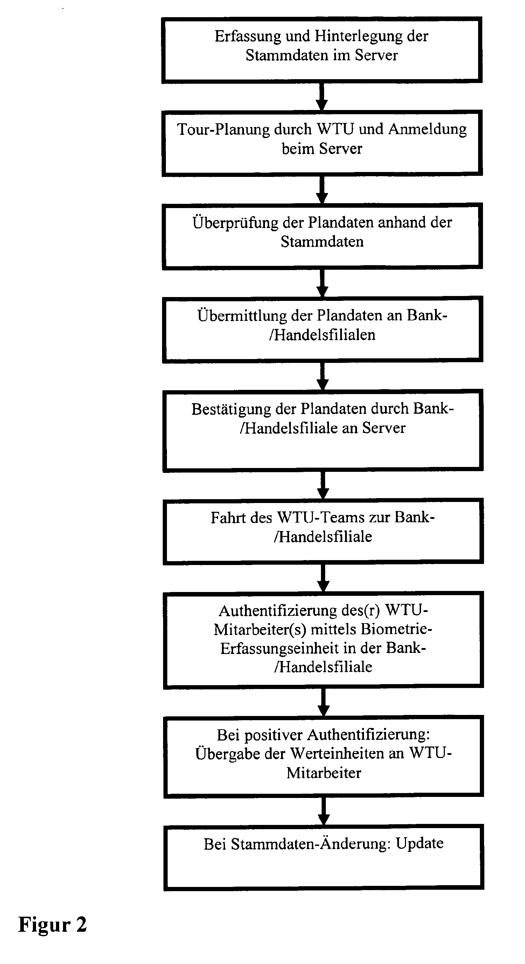

Der Schritt der Erfassung und Hinterlegung der Stammdaten (WTU und Bank-/Handelsfiliale) im Server ist der erste Schritt im Prozessablauf gemäß Figur 2. Der Server kann von einem Dritten (weder eine beteiligte Bank/Handelsunternehmen noch ein Werttransportunternehmen) betrieben werden. Es ist jedoch auch vorstellbar, dass ein WTU oder eine Bank/Handelsunternehmen den Server als Service-Provider betreibt.

Nachdem ein WTU oder eine WTU-Niederlassung eine Bearbeitungs-Tour geplant hat und die Plandaten feststehen, werden diese über die Datenverarbeitungsanlage in der WTU-Niederlassung an den Server übermittelt. Die Tour-Plandaten enthalten Informationen darüber, welche Bank-/Handelsfiliale an welchem Tag, in welchem Zeitfenster und von welchem(n) WTU-Mitarbeiter(n) zur Bearbeitung von Werteinheiten angefahren wird. Dabei können in den Plandaten zusätzlich oder alternativ zu den Namen der WTU-Mitarbeiter auch die WTU-Mitarbeiter-IDs angegeben werden. Gleiches gilt für die Bank-/Handelsfilialen, wo zusätzlich oder alternativ zu den Filialnamen und Adressen auch die Filial-ID in den Plandaten verwendet werden kann. Zur Übermittlung der Plandaten an den Server muß die WTU-Niederlassung sich zunächst ordnungsgemäß über die WTU-ID/Niederlassungs-ID in Verbindung mit dem Kennwort beim Server anmelden.

Nach Erhalt der Plandaten wird im Server vorzugsweise ein Check der Plandaten anhand der Stammdaten durchgeführt. Dabei wird beispielsweise überprüft, ob die gelisteten Filialen mit ihren Filial-IDs auch im System enthalten sind und ob für diese Filiale und dem WTU überhaupt noch ein gültiger Vertrag besteht. Darüber hinaus wird beispielsweise überprüft, ob die für die Tour eingeplanten WTU-Mitarbeiter bereits im System mit ihren WTU-Mitarbeiter-IDs vermerkt sind. Bei Unstimmigkeiten zwischen den Plandaten und den Stammdaten erfolgt eine entsprechende Mitteilung vom Server an das WTU. Wenn die Überprüfung der Plandaten keine Unstimmigkeiten aufweist, werden die Plandaten vom Server als valide übernommen. Anhand der validierten Tour-Planungsdaten, die eine Vielzahl von Bank-/Handelsfilialen betreffen, werden nun im Server filialspezifische Plandaten extrahiert bzw. sind diese auf Anforderung extrahierbar.

Im nächsten Schritt sind die Bank-/Handelsfilialen über die für sie relevanten Teile der Tourplanungsdaten/filialspezifischen Plandaten (Tag, Ankunftszeit bzw. Zeitfenster, WTU-Mitarbeiter) zu informieren. Dies kann auf unterschiedliche Weise erfolgen:

In einer Ausführungsform werden die für die jeweilige Bank-/Handelsfiliale relevanten Tour-Planungsdaten vom Server als E-Mail an die Datenverarbeitungsanlage der Bank-/Handelsfiliale übermittelt.

In einer alternativen Ausführungsform wird vom Server lediglich ein Hinweis auf das Vorliegen neuer Plandaten per E-Mail an die Bank-/Handelsfilialen versandt. Nach Erhalt dieser Erinnerungs-Mail muß dann die Bank-/Handelsfiliale sich beim Server über Filial-ID und Kennwort anmelden und sich die filialspezifischen Plandaten vom Server herunterladen.

In einer Ausführungsform ist es auch vorgesehen, dass die Bank-/Handelsfilialen sich regelmäßig selbst über das Vorliegen neuer für sie relevanter Plandaten informieren. Nachdem die Bank-/Handelsfiliale die für sie relevanten Tour-Plandaten zur Kenntnis genommen hat, sind diese noch durch einen Mitarbeiter der Bank-/Handelsfiliale zu überprüfen und gegenüber dem Server zu bestätigen.

Nachdem die Bearbeitungs-Tour geplant, die Bank-/Handelsfilialen informiert wurden und die entsprechenden Rückbestätigungen vorliegen, können nun die jeweiligen WTU-Teams ihre Touren beginnen und die Bank-/Handelsfilialen plangemäß anfahren.
Vor der Bearbeitung der Werteinheiten durch einen WTU-Mitarbeiter, d.h. vor der Geldübergabe, erfolgt nun erfindungsgemäß über eine Datenverarbeitungsanlage in der Bank-/Handelsfiliale anhand der in der Server-Datenbank gespeicherten systemspezifischen WTU-Mitarbeiter-ID und der zugehörigen Identifizierungsdaten eine Authentifizierung des WTU-Mitarbeiters.

Bei den Identifizierungsdaten handelt es sich vorzugsweise um biometrische Daten, wodurch aufgrund der hohen Fälschungssicherheit ein großes Maß an Sicherheit erreicht wird. Als biometrische Daten können beispielsweise Fingerabdruckdaten verwendet werden. Dies hat den Vorteil, dass entsprechende Sensoren (sogenannte Fingerprint-Sensoren) zur Erfassung und Digitalisierung von Fingerabdrücken bereits kostengünstig kommerziell zur Verfügung stehen. Zu diesem Zweck ist es vorgesehen, den Datenverarbeitungsanlagen in den Bank-/Handelsfilialen entsprechende Fingerprint-Sensoren zur Erfassung der Fingerabdrücke von WTU-Mitarbeitern zu zuordnen.

Analog dazu ist der Datenverarbeitungsanlage in dem WTU bzw. den Datenverarbeitungsanlagen in den WTU-Niederlassungen jeweils ebenfalls ein Fingerprint-Sensor zugeordnet. Hiermit werden die Fingerabdrücke von WTU-Mitarbeitern erfasst und digitalisiert und als Identifizierungsdaten den Stammdaten hinzugefügt.

Die Authentifizierung eines WTU-Mitarbeiters kann nun auf zwei verschiedene Weisen erfolgen:
In einer ersten Variante werden die in der Bank- oder Handelsfiliale erfassten Identifizierungsdaten (Fingerprint-Daten) des WTU-Mitarbeiters zur Authentifizierung des WTU-Mitarbeiters über die Datenverarbeitungsanlage an den Server übermittelt, wobei von dem Server überprüft wird, ob die von der Bank- oder Handelsfiliale übermittelten Identifizierungsdaten mit den gespeicherten Identifizierungsdaten übereinstimmen. Dabei gibt der Server an die Datenverarbeitungsanlage in der Bank-/Handelsfiliale eine Rückmeldung darüber, ob die Authentifizierung erfolgreich war oder nicht.

In einer zweiten Variante werden von dem Server an die Datenverarbeitungsanlage einer Bank-/Handelsfiliale zur Authentifizierung des WTU-Mitarbeiters die gespeicherten Identifizierungsdaten (Fingerprint-Daten) des WTU-Mitarbeiters übermittelt, wobei in der Datenverarbeitungsanlage der Bank-/Handelsfiliale überprüft wird, ob die in der Bank-/Handelsfiliale erfassten Identifizierungsdaten mit den vom Server übermittelten Identifizierungsdaten übereinstimmen, wobei die Datenverarbeitungsanlage der Bank-/Handelsfiliale eine Rückmeldung darüber gibt, ob die Authentifizierung erfolgreich war oder nicht.

Bei den Identifizierungsdaten kann es sich auch um ein Photo des WTU-Mitarbeiters handeln. Dabei kann das Photo alternativ oder zusätzlich zur Authentifizierung mittels Fingerprint eingesetzt werden. Zur Aufnahme der Photos sind den Datenverarbeitungsanlagen der WTU-Niederlassungen entsprechende digitale Kameras zugeordnet, wobei die digitalisierten Photos als Identifizierungsdaten den Stammdaten im Server hinzugefügt werden.

Bei der Verwendung von Photos an Stelle von Fingerprint-Daten zur Authentifizierung ist das Vorgehen das Folgende: Der Mitarbeiter der Bank-/Handelsfiliale fordert anhand des WTU-Mitarbeiternames bzw. der WTU-Mitarbeiter-ID das entsprechende Photo vom Server an. Dies wird auf einem der Datenverarbeitungsanlage zugeordneten Monitor zur Anzeige gebracht, so dass der Mitarbeiter der Bank-/Handelsfiliale sich überzeugen kann, ob der auf dem Photo dargestellte mit dem anwesenden WTU-Mitarbeiter übereinstimmt.

Bei der Verwendung von Photos zusätzlich zu Fingerprint-Daten ist das Vorgehen das Folgende: Hier kann das Photo nach erfolgreicher Fingerprint-Authentifizierung quasi als Bestätigung vom Server gesendet werden, woraufhin sich der Mitarbeiter der Bank-/Handelsfiliale durch Vergleich des Photos mit dem anwesenden WTU-Mitarbeiter zusätzlich von der erfolgreichen Authentifizierung überzeugen kann.

Zur Aktualisierung der Stammdaten können diese über eine Update-Software-Routine geändert werden. Dies ist beispielsweise beim Ausscheiden oder dem Einstieg neuer WTU-Mitarbeiter erforderlich.
In einer Weiterentwicklung der Erfindung ist es vorgesehen, dass über die Datenverarbeitungsanlagen in den Bank-/Handelsfilialen auch die tatsächliche Dauer eines Bearbeitungs-Stops, d.h. die Ankunftszeit und die Abfahrtzeit, erfasst und an den Server übermittelt wird. So kann in einfacher Weise eine Abrechnung der Bearbeitungsdienstleistung des Werttransportunternehmens unter Berücksichtigung der tatsächlichen Bearbeitungsdauer erfolgen.

## Patentansprüche

1. System zur Bearbeitung von Werteinheiten, insbesondere zur Abholung von Bargeld in Bank- oder Handelsfilialen durch Mitarbeiter von Werttransportunternehmen (WTU),
**dadurch gekennzeichnet, dass**
- ein Server mit einer Datenbank vorgesehen ist,
- in den Bank- oder Handelsfilialen Datenverarbeitungsanlagen vorgesehen sind, die über eine Datenübertragungsleitung mit dem Server verbindbar sind,
- in der Server-Datenbank einerseits Stammdaten von Bank- oder Handelsfilialen, und andererseits Stammdaten von mindestens einem Werttransportunternehmen, gespeichert sind,
- von dem Werttransportunternehmen unter Verwendung der Stammdaten an den Server Plandaten übermittelbar sind, wobei die Plandaten Informationen darüber umfassen, welche Bank-/Handelsfiliale wann und von welchem(n) WTU-Mitarbeiter(n) zur Bearbeitung von Werteinheiten aufgesucht wird,
- die für die Bank-/Handelsfilialen relevanten Plandaten vom Server an die Datenverarbeitungsanlagen der Bank- /Handelsfiliale übermittelbar sind.

2. System nach Anspruch 1,
**dadurch gekennzeichnet, dass**
die Stammdaten des mindestens einen Werttransportunternehmens folgende Informationen umfassen.
• systemspezifische Namen von WTU-Mitarbeitern,
• Identifizierungsdaten von WTU-Mitarbeitern.

3. System nach Anspruch 2,
**dadurch gekennzeichnet, dass**
vor der Bearbeitung der Werteinheiten durch einen WTU-Mitarbeiter über eine Datenverarbeitungsanlage in der Bank-/Handelsfiliale anhand der in der Server-Datenbank gespeicherten systemspezifischen WTU-Mitarbeiternamen und der zugehörigen Identifizierungsdaten eine Authentifizierung des WTU-Mitarbeiters erfolgt.

4. System nach Anspruch 2 oder 3,
**dadurch gekennzeichnet, dass**
es sich bei den Identifizierungsdaten der WTU-Mitarbeiter um biometrische Daten handelt.

5. System nach Anspruch 4,
es sich bei den Identifizierungsdaten der WTU-Mitarbeiter um Fingerabdruckdaten handelt.

6. System nach Anspruch 4 oder 5,
es sich bei den Identifizierungsdaten der WTU-Mitarbeiter um ein Photo des WTU-Mitarbeiters handelt.

7. System nach einem der vorstehenden Ansprüche,
**dadurch gekennzeichnet, dass**
die systemspezifischen Namen der WTU-Mitarbeiter als alphanumerische Zeichen ausgebildet sind, z.B. unter Verwendung des Nach- und/oder Vornamens.

8. System nach einem der Ansprüche 4 bis 7,
**dadurch gekennzeichnet, dass**
- mindestens eine Datenverarbeitungsanlage in einem Werttransportunternehmen vorgesehen ist, die über eine Datenübertragungsleitung mit dem Server verbindbar ist,
- der Datenverarbeitungsanlage ein Mittel zur Erfassung der Identifizierungsdaten der WTU-Mitarbeiter zugeordnet ist,
- Identifizierungsdaten und systemspezifische Namen der WTU-Mitarbeiter von der Datenverarbeitungsanlage an den Server zur Abspeicherung in der Datenbank übermittelt werden.

9. System nach einem der Ansprüche 4 bis 8,
**dadurch gekennzeichnet, dass**
den Datenverarbeitungsanlagen in den Bank- oder Handelsfilialen Mittel zur Erfassung der Identifizierungsdaten der WTU-Mitarbeiter zugeordnet sind.

10. System nach Anspruch 9,
**dadurch gekennzeichnet, dass**
die in der Bank- oder Handelsfiliale erfassten Identifizierungsdaten der WTU-Mitarbeiter zur Authentifizierung des WTU-Mitarbeiters über die Datenverarbeitungsanlage an den Server übermittelt werden,
wobei von dem Server überprüft wird, ob die von der Bank- oder Handelsfiliale übermittelten Identifizierungsdaten mit den gespeicherten Identifizierungsdaten übereinstimmen,
der Server an die Datenverarbeitungsanlage in der Bank-/Handelsfiliale eine Rückmeldung darüber gibt, ob die Authentifizierung erfolgreich war oder nicht.

11. System nach Anspruch 9,
**dadurch gekennzeichnet, dass**
von dem Server an die Datenverarbeitungsanlage einer Bank-/Handelsfiliale zur Authentifizierung des WTU-Mitarbeiters die gespeicherten Identifizierungsdaten des WTU-Mitarbeiters übermittelt werden, wobei in der Datenverarbeitungsanlage der Bank-/Handelsfiliale überprüft wird, ob die in der Bank-/Handelsfiliale erfassten Identifizierungsdaten mit den vom Server übermittelten Identifizierungsdaten übereinstimmen, wobei die Datenverarbeitungsanlage der Bank-/Handelsfiliale eine Rückmeldung darüber gibt, ob die Authentifizierung erfolgreich war oder nicht.

12. System nach Ansprüche 6 bis 11,
**dadurch gekennzeichnet, dass**
von dem Server an die Datenverarbeitungsanlage einer Bank-/Handelsfiliale ein Photo des WTU-Mitarbeiters übermittelt wird, das auf einem mit der Datenverarbeitungsanlage der Bank-/Handelsfiliale verbundenen Monitor zur Anzeige gebracht wird.

13. System nach Anspruch 12,
**dadurch gekennzeichnet, dass**
das Photo nach einer erfolgreichen Authentifizierung übermittelt wird.

14. System nach einem der vorstehenden Ansprüche,
**dadurch gekennzeichnet, dass**
zumindest ein Teil der Plandaten vom Server als E-Mail an die Datenverarbeitungsanlage der Bank-/Handelsfiliale übermittelt werden.

15. System nach einem der vorstehenden Ansprüche 1 bis 13,
**dadurch gekennzeichnet, dass**
vom Server an die Datenverarbeitungsanlage der Bank-/Handelsfiliale Hinweise auf das Vorliegen neuer Plandaten als E-Mail verschickt werden, woraufhin sich die Bank-/Handelsfiliale zumindest einen Teil der Plandaten vom Server herunterlädt.

16. System nach einem der vorstehenden Ansprüche,
**dadurch gekennzeichnet, dass**
die Stammdaten der Bank-/Handelsfilialen systemspezifische Namen (Filial-IDs) der Bank-/Handelsfilialen enthalten.

17. System nach Anspruch 16,
**dadurch gekennzeichnet, dass**
die Stammdaten der Bank-/Handelsfilialen den systemspezifischen Namen zugeordnete Kennworte enthalten.

18. System nach einem der vorstehenden Ansprüche,
**dadurch gekennzeichnet, dass**
die Stammdaten des mindestens einen Werttransportunternehmens einen systemspezifischen Namen (WTU-ID) des Werttransportunternehmens und/oder systemspezifische Namen (WTU-Niederlassungs-IDs) von Niederlassungen des Werttransportunternehmens enthalten.

19. System nach Anspruch 18,
**dadurch gekennzeichnet, dass**
die Stammdaten des mindestens einen Werttransportunternehmens den systemspezifischen Namen zugeordnete Kennworte enthalten.

20. System nach einem der Ansprüche 17 bis 19,
**dadurch gekennzeichnet, dass**
der Zugang einer Bank-/Handelsfiliale zum Server über die Filial-ID in Verbindung mit dem zugehörigen Kennwort abgesichert ist.

21. System nach einem der Ansprüche 19 oder 20,
**dadurch gekennzeichnet, dass**
der Zugang eines Werttransportunternehmens zum Server über die WTU-ID bzw. die WTU-Niederlassungs-ID in Verbindung mit dem zugehörigen Kennwort abgesichert ist.

22. System nach einem der vorstehenden Ansprüche,
**dadurch gekennzeichnet, dass**
die Stammdaten über ein update änderbar sind.

23. System nach einem der vorstehenden Ansprüche,
**dadurch gekennzeichnet, dass**
über die Datenverarbeitungsanlagen in den Bank-/Handelsfilialen die Dauer eines Bearbeitungs-Stops erfasst und an den Server übermittelt wird.

24. System nach einem der vorstehenden Ansprüche,
**dadurch gekennzeichnet, dass**
durch den Server eine Überprüfung der Plandaten mit den Stammdaten erfolgt.
